# EUROPÄISCHE PATENTANMELDUNG

(11) **EP 1 030 093 A2**
(43) Veröffentlichungstag der Anmeldung: **23.08.2000**
(21) Anmeldenummer: 00103514.6
(22) Anmeldetag: 18.02.2000
(51) Int. Cl.: F16L 33/22

(54) **Befestigungsvorrichtung für Schlauchkupplung**

(30) Priorität: 18.02.1999 DE 19907001
(71) Anmelder: Münster, Wilhelm, 47495 Rheinberg (DE)
(72) Erfinder: Münster, Wilhelm, 47495 Rheinberg (DE); Münster, Sven, 47495 Rheinberg (DE)
(74) Vertreter: Cohausz, Helge B., Dipl.-Ing.

(57) **Zusammenfassung**

Die Erfindung betrifft eine Befestigungsvorrichtung (1) zur Befestigung eines Kupplungsstücks (3) einer Schlauchkupplung an einem Schlauchende (2), wobei das Schlauchende (2) über das Kupplungsstück (3) gestülpt und durch die Befestigungsvorrichtung (1) im Befestigungszustand radial nach innen gedrückt ist, wobei die Befestigungsvorrichtung (1) ein Halteelement (5) mit mehreren in axialer Richtung sich erstreckenden und in radialer Richtung elastisch federnden Haltearmen (4) aufweist und wobei sie einen Klemmring (6) umfaßt, der mit einer konusförmigen Innenkontur (18) außen um die Haltearme (4) herum derart verschiebbar angeordnet ist, daß durch eine axiale Verschiebung des Klemmrings (6) die Haltearme (4) radial nach innen in die Außenseite (13) des Schlauchendes (2) hinein biegbar sind, wobei die Haltearme (4) außen einen mit einer Steigung schräg verlaufenden Bereich (19) derart aufweisen, daß im Befestigungszustand der schräg verlaufende Bereich plan am Innenkonus (18) des Klemmrings (6) anliegt.

## Beschreibung

Die vorliegende Erfindung betrifft eine Befestigungsvorrichtung zur Befestigung eines Kupplungsstücks einer Schlauchkupplung an einem Schlauchende, wobei das Schlauchende über das Kupplungsstück gestülpt und durch die Befestigungsvorrichtung im Befestigungszustand radial nach innen gedrückt ist, wobei die Befestigungsvorrichtung ein Halteelement mit mehreren in axialer Richtung sich erstreckenden und in radialer Richtung elastisch federnden Haltearmen aufweist und wobei sie einen Klemmring umfaßt, der mit einer konusförmigen Innenkontur außen um die Haltearme herum derart verschiebbar angeordnet ist, daß durch eine axiale Verschiebung des Klemmrings die Haltearme im Befestigungszustand radial nach innen in die Außenseite des Schlauchendes hinein biegbar sind. Die Erfindung betrifft ferner ein Kupplungsstück für eine derartige Befestigungsvorrichtung.

Schlauchkupplungen sind für die lösbare Verbindung von Schläuchen untereinander und von Schläuchen mit Vorrichtungen oder Behältern bekannt, wobei durch die Schläuche und durch die Kupplungsstücke Medien aller Art unter verschiedenen Drücken fließen können. Insbesondere werden derartige Schlauchkupplungen für die Nahrungs- und Genußmittelindustrie bei solchen Schläuchen eingesetzt, durch die flüssige Lebensmittel transportiert werden.

Dabei sind die freien Schlauchenden häufig auf das Kupplungsstück aufgeschrumpft und mit einer äußeren Schlauchschelle als Befestigungsvorrichtung gesichert. Diese Art der Verbindung zwischen Schlauch und Kupplungsstück erfordert sowohl beim Herstellen als auch beim Lösen der Verbindung sehr große Kräfte, die oftmals nur mit aufwendigen Werkzeugen aufgebracht werden können. Insbesondere das Herstellen einer derartigen Verbindung bedeutet mit einer Dauer von bis zu zwei Stunden einen sehr hohen Zeitaufwand.

Ferner ist es bekannt, die Kupplungsstücke maschinell in das freie Schlauchende einzupressen. Hierbei ist ebenfalls der Einsatz aufwendiger Werkzeuge erforderlich, um die hohen Einpreßkräfte aufbringen zu können. Außerdem ist diese Verbindung nicht lösbar, was insbesondere beim Einsatz zur Förderung von Nahrungsmitteln einen extrem hohen Aufwand hinsichtlich der notwendigen Reinigungsarbeiten bedeutet.

Bei beiden Möglichkeiten ist außerdem von großem Nachteil, daß es häufig zu Verletzungen der Schlauchinnenseite kommt. Derartige Schlauchverletzungen sind wegen der hohen Hygieneanforderungen in der Nahrungs- und Genußmittelindustrie, beispielsweise bei Molkerei- oder Brauereibetrieben, nicht akzeptabel. Auch treten Spalte oder ähnliche Ausnehmungen zwischen der Innenseite des Schlauches und der Außenseite des Kupplungsstücks auf, in denen sich Reste der geförderten Flüssigkeit absetzen können. Dies birgt insbesondere beim Einsatz bei Molkereien oder Brauereien die Gefahr einer Pilzbildung.

Ferner ist eine Befestigungsvorrichtung der eingangs genannten Art aus der US 2 877 027 bekannt. Hierbei wird jedoch die äussere Hülle des Schlauchendes beschädigt bzw. entfernt, wodurch eine große Anzahl kleinster Spalte, Ritzen und Ausnehmungen offenliegen, die in hohem Maße die Gefahr möglicher Infektionsherde bedeuten. Für den in dem US-Dokument angegebenen Einsatzbereich ist dies ohne Bedeutung, da es sich um eine Verschraubung im Bereich der Hochdruck-Verbindungen beispielsweise für Öl, Benzin oder Luft handelt, wobei eine Gefahr durch Pilzbildung nicht gegeben ist. Für den Lebensmittelbereich ist eine derartige Verbindung jedoch nicht geeignet.

Außerdem müssen die Verbindungen gemäß der US 2 877 027 entweder überhaupt nicht mehr oder aber nur sehr selten wieder gelöst werden, so daß die durch die Reibung zwischen der Schlauchaußenseite und dem Klemmring beim Anziehen oder Lösen der Befestigungsvorrichtung auftretenden hohen Kräfte nicht von Nachteil sind. Demgegenüber müssen Verbindungen im Lebensmittelbereich mehrfach pro Tag gelöst werden, um eine gründliche Reinigung aller Teile zu ermöglichen. Eine schnelle und einfache Lösbarkeit und Montierbarkeit der Verbindung ohne Werkzeug bei sicherem Halt ist daher von großer Bedeutung.

Aufgabe der Erfindung ist es, eine konstruktiv einfache, preiswert herzustellende und leicht handhabbare Befestigungsvorrichtung der eingangs genannten Art zu schaffen, die mit geringem Kraftaufwand schnell und einfach sowie ohne Schlauchverletzungen zu montieren und zu demontieren ist und die auch nach mehrfachem Lösen noch einen dauerhaft dichten Halt zwischen Schlauch und Kupplungsstück gewährleistet. Dabei soll die Gefahr einer Pilzbildung durch Ablagerungen in Spalten oder Ausnehmungen auf ein Minimum reduziert bzw. vollständig ausgeschlossen sein.

Diese Aufgabe wird erfindungsgemäß durch eine Befestigungsvorrichtung nach Anspruch 1 gelöst. Wesentlich ist dabei, daß die Haltearme außen einen mit einer Steigung schräg verlaufenden Bereich derart aufweisen, daß im Befestigungszustand der schräg verlaufende Bereich plan bzw. über seine gesamte Längserstreckung am Innenkonus des Klemmrings anliegt.

Der schräg verlaufende Bereich kann dabei vorzugsweise ebenfalls konusförmig ausgebildet sein, so daß eine flächige Berührung erfolgt. Aber auch eine linienförmige Berührung mit dem Innenkonus des Klemmrings ist möglich.

Hierdurch wird bei einfacher Konstruktion eine Befestigungsvorrichtung geschaffen, die ein leichtes und schnelles Befestigen und Lösen eines Kupplungsstücks einer Schlauchkupplung an einem Schlauchende ermöglicht. Das freie Schlauchende wird dabei nur locker auf einen Bereich des Kupplungsstücks aufgeschoben und von außen durch die Haltearme des Halteelements mit einer relativ geringen Kraft auf das Kupplungsstück gedrückt. In einem abschließenden Montagevorgang wird nur noch der Klemmring relativ zu den Haltearmen des Halteelements derart verschoben, daß die Haltearme nach innen auf das Schlauchende gedrückt werden und somit die erforderliche Anpress- und Haltekraft zwischen dem Kupplungsstück und dem Schlauchende erzeugen. Die erforderliche Anpress- und Haltekraft wird dabei durch den im Befestigungszustand gegebenen großen Kraftübertragungsbereich zwischen der Außenseite der Haltearme und dem Innenkonus des Klemmrings besonders sicher auf das Schlauchende übertragen.

Nur im Befestigungszustand liegt der schräg verlaufende Bereich der Haltearme plan am Innenkonus des Klemmrings an. Solange der Klemmring noch nicht vollständig bis in die Befestigungsposition gebracht ist, liegt der schräg verlaufende Bereich der Haltearme nur an seinem freien Ende linienförmig bzw. punktförmig am Innenkonus des Klemmrings an. Hierdurch treten bei einer Verschiebung bzw. Verdrehung des Klemmrings nur sehr geringe Reibungskräfte zwischen den Haltearmen und dem Klemmring auf, so daß das Anziehen und das Lösen der Verbindung schnell und einfach ohne Werkzeug möglich ist.

Ein wesentlicher Vorteil der erfindungsgemäßen Vorrichtung besteht somit darin, daß die Verbindung zwischen dem Kupplungsstück und dem Schlauchende nicht nur leicht und schnell zu montieren, sondern ebenso einfach und schnell zu lösen ist. Daher können die Kupplungsstücke auf einfache Weise in relativ kleinen Reinigungsvorrichtungen, insbesondere in Behältern mit Reinigungsflüssigkeit regelmäßig gründlich gereinigt werden, um den hohen hygienischen Anforderungen in der Nahrungs- und Genußmittelindustrie gerecht zu werden. Der große Zeit- und Kraftaufwand zum Lösen und Wiederherstellen der Verbindung zwischen Schlauch und Kupplungsstück mit den bisher bekannten Befestigungsvorrichtungen hat in der Praxis oftmals dazu geführt, daß die erforderlichen Reinigungsarbeiten gar nicht oder nur in unzureichendem Maße ohne Ablösen des Kupplungsstücks vom Schlauchende erfolgt sind.

Erfindungsgemäß werden konstruktionsbedingte Freiräume zwischen der Schlauchinnenseite und dem Kupplungsstück sowie durch Verletzungen der Schlauchinnenwandung hervorgerufene Öffnungen vermieden, in denen sich feste oder viskose Partikel des geförderten Mediums absetzen können, so daß Verunreinigungen oder Pilzbildungen nicht auftreten können. Auch wird die Außenseite des Schlauchs nicht verletzt oder beschädigt, so daß auch hier keine Gefahr einer Verunreinigung durch abgesetzte Partikel des geförderten Mediums besteht.

Durch die einfache Konstruktion ist die Befestigungsvorrichtung nicht nur leicht handhabbar, sondern auch preiswert herzustellen. Sie stellt auch nach häufigem Lösen und Herstellen der Verbindung eine dauerhaft dichte und den hygienischen Anforderungen gerecht werdende Befestigung des Schlauchendes am Kupplungsstück sicher. Außerdem wird die Verbindungsstelle zwischen Schlauchende und Kupplungsstück durch die außenliegenden Haltearme des Halteelements sowie den um diese herum angeordneten Klemmring gegen äußere Einflüsse, insbesondere gegen das Eindringen von Schmutzpartikeln zusätzlich geschützt.

Besonders vorteilhaft ist es, wenn der Klemmring im montierten Zustand lösbar mit dem Halteelement verschraubt ist. Dadurch kann auf besonders einfache Weise die axiale Verschiebung des Klemmrings relativ zum Halteelement vorgenommen und dosiert werden und es wird gleichzeitig eine Sicherung gegen unbeabsichtigtes Verschieben des Klemmrings erreicht. Vorzugsweise wird dabei ein grobes Gewinde, insbesondere ein Kordelgewinde vorgeschlagen, das in dem Halteelement als Außengewinde und im Klemmring als Innengewinde eingebracht ist und das eine schnelle relative Verschiebung bei wenigen Umdrehungen ermöglicht.

In einer besonders bevorzugten Ausführungsform der Erfindung wird vorgeschlagen, daß zwischen der Außenseite des Schlauchs und der Innenwandung des Klemmrings ein radialer Abstand vorgesehen ist. Dadurch werden die Reibungskräfte zwischen der Schlauchaußenseite und dem Klemmring beim Anziehen oder Lösen der Befestigungsvorrichtung erheblich reduziert. Die Verbindung kann daher mehrfach schnell und einfach ohne Werkzeug gelöst werden, so daß eine gründliche Reinigung aller Teile möglich ist.

Ein besonders sicherer Halt des freien Schlauchendes auf dem Kupplungsstück kann dadurch erreicht werden, daß die Haltearme sich in einem Bereich erstrecken, in dem der Schlauch über das Kupplungsstück gestülpt ist. Dadurch wird das Schlauchende zwischen dem innenliegenden Kupplungsstück und den von außen angepreßten Haltearmen besonders sicher festgehalten. Günstig ist es dabei, wenn die Haltearme über ihre gesamte Längserstreckung an der Außenseite des Schlauchs anliegen oder in dem Befestigungszustand in der Schlauchwandung einliegen.

Besonders vorteilhaft ist es, wenn im Befestigungszustand die dem freien Ende des Kupplungsstücks abgewandte Stirnseite des Klemmrings bündig bzw. in einer radialen Ebene mit dem freien Ende der Haltearme abschließt. Dadurch werden Spalte oder Ausnehmungen vermieden, in denen sich andernfalls Partikel ablagern könnten.

Besonders vorteilhaft ist es ferner, wenn das Halteelement innenseitig einen Absatz aufweist, gegen dessen Stirnfläche das Schlauchende im montierten Zustand anliegt. Auf diese Weise wird bei jedem Montagevorgang eine definierte Lage zwischen Halteelement und Schlauchende erreicht und eine zusätzliche Dichtfläche zwischen Schlauchende und Halteelement geschaffen.

Günstig ist es ferner, wenn die Haltearme radial nach innen gerichtete Vorsprünge und/oder Ausnehmungen aufweisen. Die Vorsprünge pressen sich im montierten Zustand zusätzlich in die Außenseite des Schlauches hinein, so daß ein besonders sicherer Halt des Schlauchendes an der Befestigungsvorrichtung erreicht wird. Die Schlauchwandung wird hierbei jedoch nicht beschädigt.

Eine besonders einfache Möglichkeit zur Montage und zur Demontage der Befestigungsvorrichtung wird dadurch geschaffen, daß die Befestigungsvorrichtung lösbar an dem Kupplungsstück befestigt ist. Hierzu wird in einer bevorzugten Ausführungsform vorgeschlagen, daß das Halteelement, insbesondere über ein Feingewinde, auf das Kupplungsstück aufschraubbar ist. Auf diese Weise wird ein sicherer aber dennoch einfach herzustellender und einfach zu lösender Halt der Befestigungsvorrichtung an dem Kupplungsstück gewährleistet.

Die Befestigungsvorrichtung kann in besonders einfacher und kostengünstiger Weise aus Kunststoff hergestellt sein wodurch außerdem bei hoher Festigkeit ein geringes Gewicht erzielbar ist. Sie kann jedoch auch aus anderen, insbesondere metallenen, Werkstoffen gefertigt sein.

Besonders vorteilhaft ist es ferner, wenn sich an dem äußeren Umfang der Befestigungsvorrichtung ein Kragen radial nach. außen erstreckt. Durch einen derartigen Kragen wird eine Beschädigung des freien Kupplungsendes des Kupplungsstücks vermieden, wenn die Schläuche mit eingesetztem Kupplungsstück über den Boden gezogen werden. Der Schutzkragen verhindert dabei, daß die empfindlichen Kontaktstellen des Kupplungsstücks in Kontakt mit dem Boden kommen.

Besonders günstig ist es, wenn der Kragen an den Klemmring angeformt, insbesondere angegossen ist. Der Kragen kann jedoch auch an dem Halteelement oder direkt am Kupplungsstück angebracht sein, wobei ebenfalls ein nachträgliches Aufbringen des Kragens als separates Teil, insbesondere durch eine Klemmverbindung, möglich ist.

Von Vorteil ist es dabei, wenn der Kragen einen Außendurchmesser aufweist, der größer ist als der Außendurchmesser des freien Endes der Befestigungsvorrichtung bzw. des Kupplungsstücks. Eine Berührung des freien Endes der Befestigungsvorrichtung bzw. des Kupplungsstücks mit dem Boden ist dann sowohl bei längeren als auch bei kürzeren Schläuchen besonders sicher ausgeschlossen. Insbesondere wird vorgeschlagen, daß der Kragen einen Außendurchmesser aufweist, der zwischen dem zweifachen und vierfachen Wert des Außendurchmessers des Schlauches beträgt.

In einer bevorzugten Ausführungsform der Erfindung wird vorgeschlagen, daß die dem freien Ende des Kupplungsstücks abgewandte Stirnseite des Kragens kegelstumpfförmig abgeschrägt ausgebildet ist. Auf diese Weise wird bei hoher Stabilität des Kragens ein besonders leichtes Ziehen der Schläuche ermöglicht und Verhakungen des Kragens an Hindernissen werden vermieden.

Die Erfindung betrifft auch das mit der Befestigungsvorrichtung zusammenwirkende und mit einem in axialer Richtung verlaufenden Kanal ausgeführte Kupplungsstück. Dabei ist es besonders vorteilhaft, wenn das Kupplungsstück in dem Bereich, in dem das Schlauchende übergestülpt ist, über seinen Umfang einen oder mehrere nach außen gerichtete, über den Umfang ringförmige Vorsprünge aufweist. Diese wulstförmigen Vorsprünge werden im montierten Zustand in die Innenseite des Schlauchendes hineingedrückt und gewährleisten dadurch einen besonders sicheren und dichten Halt, ohne jedoch die Innenwandung des Schlauches zu beschädigen.

Ferner ist es vorteilhaft, wenn das Kupplungsstück an seiner Außenseite einen Absatz aufweist, gegen dessen Stirnfläche das Schlauchende im montierten Zustand anliegt. Dieser Absatz liegt im montierten Zustand in axialer Richtung auf gleicher Höhe wie der Absatz des Halteelements und gewährleistet somit eine definierte Lage sowie eine zusätzliche Dichtfläche zwischen dem Schlauchende und dem Kupplungsstück.

Besonders vorteilhaft ist es ferner, wenn sich der Innendurchmesser des Kupplungsstücks in Richtung zu dem freien Ende des Bereichs, in dem das Schlauchende übergestülpt ist, insbesondere konusförmig erweitert, wobei die Außenseite des freien Endes im Befestigungszustand an der Innenseite des Schlauchs anliegt oder einliegt. Dadurch werden Spalte oder Ausnehmungen zwischen der Mündung des Kupplungsstücks und der Innenwandung des Schlauches vermieden, in denen sich andernfalls Partikel ablagern könnten, was zu den zuvor erwähnten Gefahren einer Pilzbildung führen würde. Gleichzeitig werden durch diesen glatt anliegenden Übergang in das Kupplungsstück (Tülle) fast keine Strömungsverluste hervorgerufen.

Weitere Vorteile und Merkmale der Erfindung ergeben sich aus der nachfolgenden Beschreibung und den in den Zeichnungen dargestellten Ausführungsbeispielen.

Es zeigen:
- Figur 1:: Querschnitt durch eine erfindungsgemäße Befestigungsvorrichtung im montierten Zustand;
- Figur 2:: Querschnitt durch die Befestigungsvorrichtung aus Figur 1 im für die Demontage gelösten Zustand;
- Figur 3:: Querschnitt durch zwei aneinander gekoppelte Kupplungsstücke zum Herstellen einer Verbindung zwischen zwei Schläuchen;
- Figur 4:: Auseinandergezogene Ansicht der einzelnen Bauteile der Vorrichtung aus Figur 3;
- Figur 5:: Vergrößerte Schnittansicht des Klemmrings;
- Figur 6:: Vergrößerte Schnittansicht des Halteelements;
- Figur 7:: Stirnansicht des Halteelements von Figur 6 aus Richtung A;
- Figur 8:: Schnittansicht einer bevorzugten Ausführungsvariante;
- Figur 9:: Abgewandelte Ausführungsform zu der Variante aus Figur 8, und
- Figur 10:: Ansicht eines Kupplungsstücks.

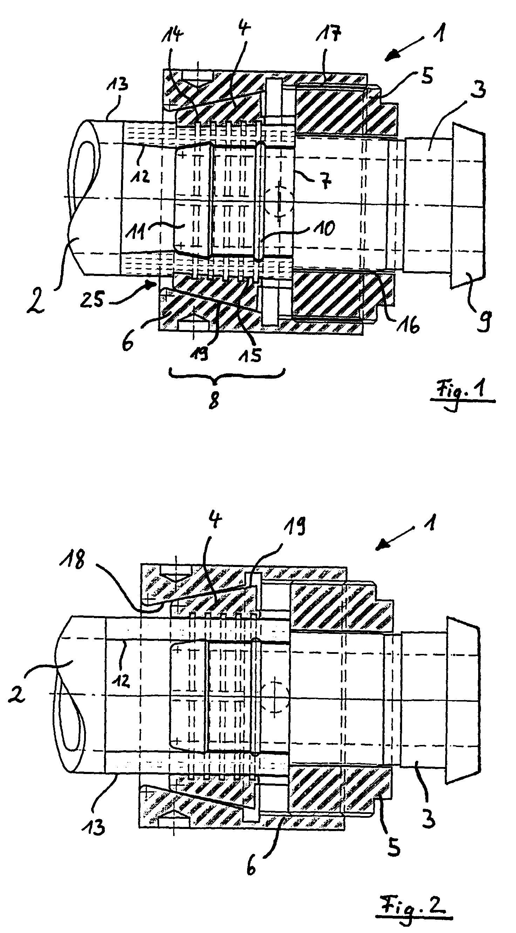

In Figur 1 ist der fertig montierte Zustand einer erfindungsgemäßen Befestigungsvorrichtung 1 dargestellt, wobei das freie Ende eines Schlauches 2 an einem Kupplungsstück 3 fest eingespannt ist. Die feste Einspannung des Schlauchendes erfolgt dabei durch mehrere Haltearme 4 eines Halteelements 5, die durch einen äußeren Klemmring 6 radial nach innen in die äußere Mantelfläche des Schlauches 2 hineingedrückt werden und den Schlauch 2 somit an das Kupplungsstück 3 anpressen.

Das Kupplungsstück 3 weist einen Absatz 7 auf, gegen den das freie Ende des Schlauches 2 anliegt. Der Schlauch 2 ist dabei lediglich über den Bereich 8 des Kupplungsstücks 3 mit geringerem Außendurchmesser gestülpt. An dem diesem Bereich 8 gegenüberliegenden freien Ende weist das Kupplungsstück 3 eine Kupplungshälfte 9 der eigentlichen Kupplungsvorrichtung auf, die hier konisch ausgeführt ist, um mit einer zweiten Kupplungshälfte mit einem entsprechend ausgebildeten Innenkonus zusammengekuppelt werden zu können.

In dem im Inneren des Schlauches 2 befindlichen Bereich 8 ist das Kupplungsstück 3 mit einer ringförmigen Wulst 10 und einer konusförmigen Einlaufschräge 11, die an ihrem Ende mit dem größeren Durchmesser einen kleinen Rücksprung aufweist, ausgebildet. Durch den über die Haltearme 4 ausgeübten radialen Anpressdruck legt sich die Innenseite 12 des Schlauches 2 exakt an die Außenkontur des Bereiches 8 des Kupplungsstücks 3 an. In gleicher Weise legt sich die Außenseite 13 des Schlauches 2 exakt den Ausnehmungen 14 bzw. Vorsprüngen 15, die an der Innenseite der Haltearme 4 ausgebildet sind, an. Auf diese Weise wird eine besonders dichte und feste Verbindung des Schlauches 2 an dem Kupplungsstück 3 gewährleistet, die auch bei hohen Zugkräften sich nicht löst.

Das Halteelement 5 ist über ein Feingewinde 16 auf das Kupplungsstück 3 aufgeschraubt, während der Klemmring 6 über ein Grobgewinde 17 auf das Halteelement 5 aufgeschraubt ist. Diese Gewindeverbindungen 16, 17 gewährleisten bei einfacher und schneller Montage- und Demontagemöglichkeit, einen sicheren und gut einstellbaren Halt zwischen den einzelnen Bauteilen.

In Figur 2 ist die Befestigungsvorrichtung 1 vor dem Festspannen des Schlauches 2 auf dem Kupplungsstück 3 dargestellt. Bei der Montage wird das Kupplungsstück 3 mit seinem vorderen Bereich 8 zunächst locker in den Schlauch 2 eingesteckt.

Anschließend wird das Halteelement 5 über das Feingewinde 16 auf das Kupplungsstück 3 aufgeschraubt. Hierbei liegen die Haltearme 4 mit leichtem Druck an der Außenseite 13 des Schlauches 2 an. Die eigentliche Befestigung des Schlauches 2 auf dem Kupplungsstück 3 erfolgt abschließend durch Aufschrauben des Klemmrings 6 auf das Halteelement 5. Dabei drückt die konusförmige Innenkontur 18 in zunehmendem Maße auf die schräg ausgebildeten Außenseiten 19 der Haltearme 4, so daß diese radial nach innen in die Außenseite 13 des Schlauches 2 hineingedrückt werden (Figur 1). Im Befestigungszustand liegen die schräg ausgebildeten Außenseiten 19 der Haltearme 4 schließlich plan am Innenkonus 18 des Klemmrings 6 an. Ein bevorzugter Winkel des Innenkonus 18 beträgt 15°.

Beim Lösen dieser Befestigungsvorrichtung 1 wird zunächst der Klemmring 6 vom Halteelement 5 abgeschraubt, wodurch die Haltearme 4 aus der Außenseite 13 des Schlauches 2 heraus zurück nach außen federn können. Anschließend wird das Halteelement 5 vom Kupplungsstück 3 abgeschraubt, so daß der Schlauch 2 vollkommen freigegeben ist und leicht vom Kupplungsstück 3 abgezogen werden kann. Somit können sowohl das Kupplungsstück 3, das üblicherweise aus VA-Stahl hergestellt ist, als auch das Halteelement 5 sowie der Klemmring 6, die vorzugsweise aus Kunststoff gespritzt sind, leicht und schnell vom Schlauch getrennt und jeweils in speziellen Reinigungsflüssigkeiten gereinigt werden.

In Figur 1 ist ferner gut zu erkennen, daß im montierten Zustand zwischen dem Kupplungsstück 3 und der Innenwandung 12 des Schlauches 2 keine Öffnungen, Spalte oder ähnliche Ausnehmungen vorhanden sind, in denen sich Rückstände ablagern können. Somit wird die Gefahr einer Pilzbildung beim Einsatz in Brauerei- oder Molkereibetrieben ausgeschlossen.

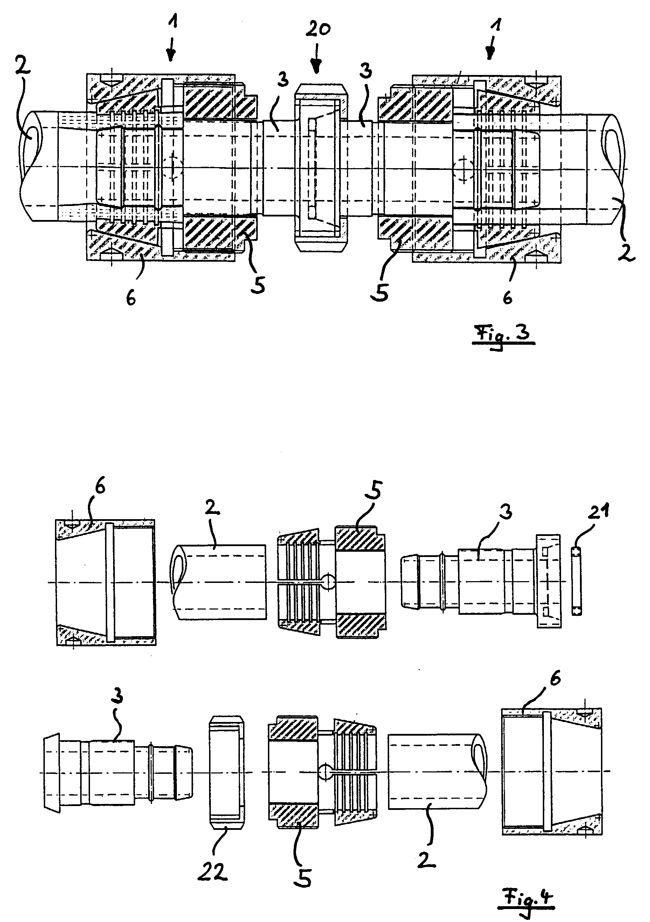

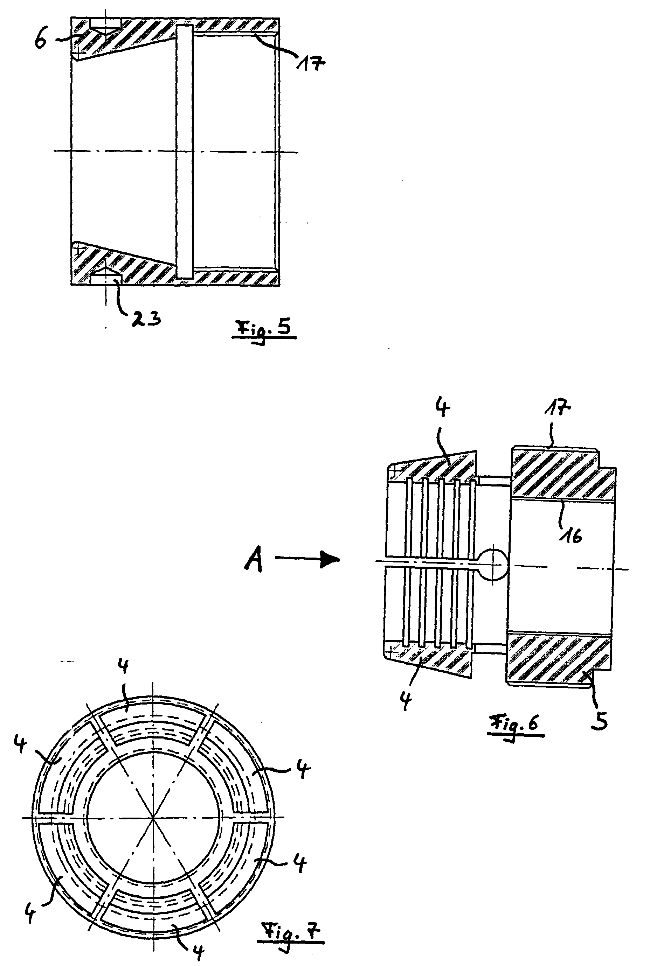

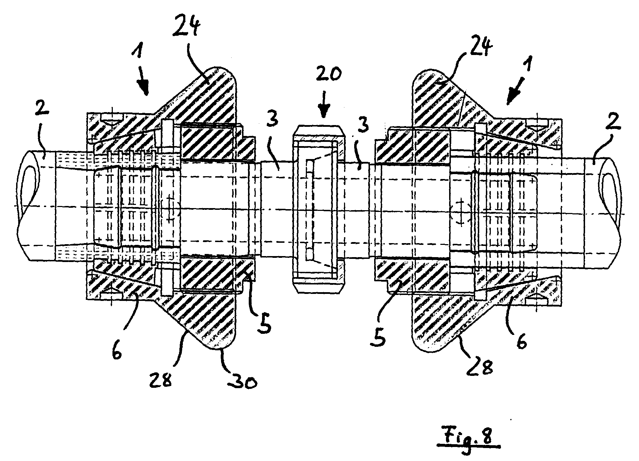

Figur 3 zeigt zwei erfindungsgemäße Befestigungsvorrichtungen an zwei erfindungsgemäßen Kupplungsstücken 3, die über eine an sich bekannte Kupplung 20 mit konusförmigen Kupplungshälften 9, einem Dichtring 21 und einer Überwurfmutter 22 aneinander gekuppelt sind. Dabei ist in der linken Figurenhälfte die Befestigungsvorrichtung 1 im montierten Zustand und in der rechten Figurenhälfte die Befestigungsvorrichtung 1 im gelösten Zustand gezeigt. Die einzelnen Bauteile sind in Figur 4 im demontierten Zustand jeweils separat dargestellt. Dabei weist der Klemmring 6 mehrere gleichmäßig über seinen Umfang verteilte Sacklochbohrungen 23 auf, damit er mit einem entsprechenden Werkzeug leichter bis zu dem geforderten Maße auf das Halteelement 5 aufgeschraubt werden kann (Figur 5). Das Halteelement 5 weist sechs über seinen Umfang gleichmäßig verteilte Haltearme 4 auf, die einstückig mit dem Halteelement 5 ausgebildet sind (Figur 6 und Figur 7).

Figur 8 entspricht im wesentlichen der Darstellung in Figur 3, wobei jedoch an der Außenseite des Klemmrings 6 jeweils ein nach außen überstehender Kragen 24 angeformt ist. Wenn die Schläuche im entkoppelten Zustand über den Boden gezogen werden, so verhindern die Kragen 24, daß die freien Kupplungshälften 9 in Kontakt mit dem Boden kommen können, so daß Beschädigungen hieran vermieden werden. Der Kragen 24 und der Klemmring 6 bestehen aus Kunststoff, wobei der Kragen 24 an den Klemmring 6 angegossen ist.

Der Kragen 24 hat einen Außendurchmesser, der größer ist als der Außendurchmesser des freien Endes des Kupplungsstücks 3 und der größer ist als der Außendurchmesser der Kupplung 20. Der Außendurchmesser ist hier etwa doppelt so groß wie der Außendurchmesser des Schlauches 2.

Seine äußeren Kanten 30 sind abgerundet gehen in die unter einem Winkel von ca. 40° bis 50° kegelstumpfförmig abgeschrägte Stirnseite 28 über, welche von dem freien Ende des Kupplungsstücks 3 bzw. von der Kupplung 20 abgewandt ist.

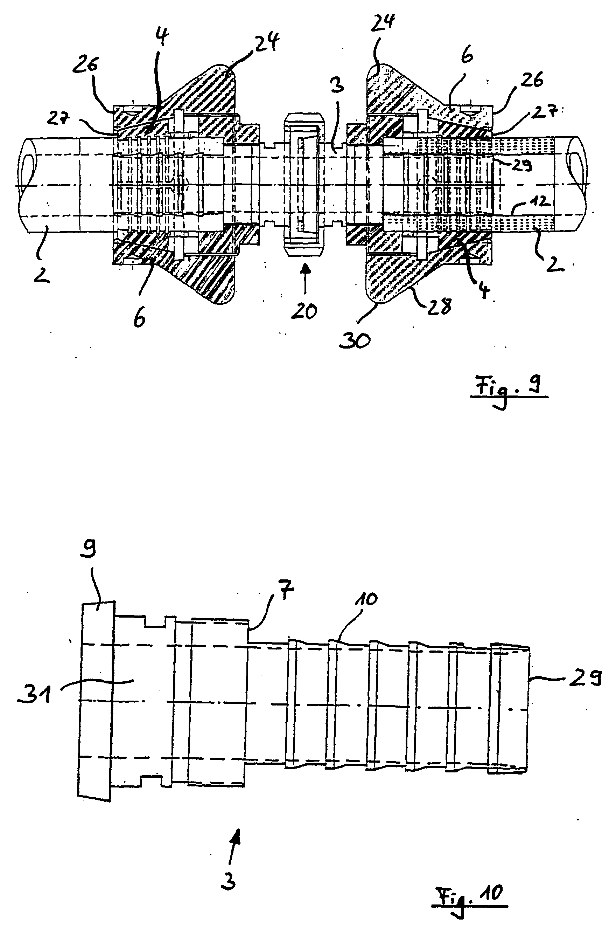

Bei der in Figur 9 dargestellten Ausführungsvariante ist die rechte Befestigungsvorrichtung 1 derart ausgeführt, daß im dargestellten Befestigungszustand die dem freien Ende des Kupplungsstücks 3 abgewandte Stirnseite 26 des Klemmrings 6 bündig bzw. in einer radialen Ebene mit dem freien Ende 27 der Haltearme 4 abschließt. Die linke Befestigungsvorrichtung 1 ist hier nur leicht angezogen, so daß die dem freien Ende des Kupplungsstücks 3 abgewandte Stirnseite 26 des Klemmrings 6 nicht in einer radialen Ebene mit dem freien Ende 27 der Haltearme 4 liegt. Auch liegen die schräg ausgebildeten Außenseiten 19 der Haltearme 4 hierbei noch nicht plan am Innenkonus 18 des Klemmrings 6 an.

Der Durchmesser des axialen Kanals 31 des Kupplungsstücks 3 erweitert sich in Richtung zu dem freien Ende 29 konusförmig (Figur 10). Die Außenseite des freien Endes 29 liegt im Befestigungszustand an der Innenseite 12 des Schlauchs 2 glatt an, so daß kein Spalt und keine Ausnehmungen zwischen der Mündung des Kupplungsstücks 3 und der Innenwandung 12 des Schlauches 2 entsteht.

Die Schläuche 2 können mit den Kupplungshälften 9 sowohl untereinander verbunden werden als auch an andere Vorrichtungen, beispielsweise an Vorratstanks, angeschlossen werden.

## Patentansprüche

1. Befestigungsvorrichtung (1) zur Befestigung eines Kupplungsstücks (3) einer Schlauchkupplung an einem Schlauchende (2), wobei das Schlauchende (2) über das Kupplungsstück (3) gestülpt und durch die Befestigungsvorrichtung (1) im Befestigungszustand radial nach innen gedrückt ist, wobei die Befestigungsvorrichtung (1) ein Halteelement (5) mit mehreren in axialer Richtung sich erstreckenden und in radialer Richtung elastisch federnden Haltearmen (4) aufweist und wobei sie einen Klemmring (6) umfaßt, der mit einer konusförmigen Innenkontur (18) außen um die Haltearme (4) herum derart verschiebbar angeordnet ist, daß durch eine axiale Verschiebung des Klemmrings (6) die Haltearme (4) radial nach innen in die Außenseite (13) des Schlauchendes (2) hinein biegbar sind,
**dadurch gekennzeichnet,**
daß die Haltearme (4) außen einen mit einer Steigung schräg verlaufenden Bereich (19) derart aufweisen, daß im Befestigungszustand der schräg verlaufende Bereich plan am Innenkonus (18) des Klemmrings (6) anliegt.

2. Befestigungsvorrichtung nach Anspruch 1, **dadurch gekennzeichnet,** daß zwischen der Außenseite des Schlauchs (2) und der Innenwandung des Klemmrings (6) ein radialer Abstand (25) vorgesehen ist.

3. Befestigungsvorrichtung nach Anspruch 1 oder 2, **dadurch gekennzeichnet,** daß die Haltearme (4) über ihre gesamte Längserstreckung an der Außenseite (13) des Schlauchs (2) anliegen oder einliegen.

4. Befestigungsvorrichtung nach einem der vorherigen Ansprüche, **dadurch gekennzeichnet,** daß im Befestigungszustand die dem freien Ende des Kupplungsstücks (3) abgewandte Stirnseite (26) des Klemmrings (6) bündig mit dem freien Ende (27) der Haltearme (4) abschließt.

5. Befestigungsvorrichtung nach einem der vorherigen Ansprüche, **dadurch gekennzeichnet,** daß sie lösbar an dem Kupplungsstück (3) befestigt ist.

6. Befestigungsvorrichtung nach einem der vorherigen Ansprüche, **dadurch gekennzeichnet,** daß sie aus Kunststoff gefertigt ist.

7. Befestigungsvorrichtung nach einem der vorherigen Ansprüche, **dadurch gekennzeichnet,** daß an ihrem äußeren Umfang ein radial nach außen gerichteter Kragen (24) angeordnet ist.

8. Befestigungsvorrichtung nach Anspruch 7, **dadurch gekennzeichnet,** daß der Kragen (24) an den Klemmring (6) angeformt ist.

9. Befestigungsvorrichtung nach Anspruch 7 oder 8, **dadurch gekennzeichnet,** daß der Kragen (24) einen Außendurchmesser aufweist, der größer ist als der Außendurchmesser des freien Endes der Befestigungsvorrichtung (1) bzw. des Kupplungsstücks (3).

10. Befestigungsvorrichtung nach einem der Ansprüche 7 bis 9**, dadurch gekennzeichnet,** daß die dem freien Ende des Kupplungsstücks (3) abgewandte Stirnseite (28) des Kragens (24) kegelstumpfförmig abgeschrägt ausgebildet ist.

11. Kupplungsstück für eine Befestigungsvorrichtung nach einem der vorherigen Ansprüche, **dadurch gekennzeichnet,** daß das Kupplungsstück (3) in dem Bereich (8), in dem das Schlauchende (2) übergestülpt ist, über seinen Umfang mindestens einen nach außen gerichteten ringförmigen Vorsprung (10) aufweist.

12. Kupplungsstück für eine Befestigungsvorrichtung nach einem der Ansprüche 1 bis 10 und insbesondere nach Anspruch 11, **dadurch gekennzeichnet,** daß sich der Innendurchmesser des Kupplungsstücks (3) in Richtung zu dem freien Ende (29) des Bereichs (8), in dem das Schlauchende (2) übergestülpt ist, insbesondere konusförmig erweitert, wobei die Außenseite des freien Endes (29) im Befestigungszustand an der Innenseite des Schlauchs (2) anliegt oder einliegt.
